# FASCICULE DE BREVET EUROPEEN

(11) **EP 3 990 755 B1**
(45) Date de publication et mention de la délivrance du brevet: **12.11.2025**
(21) Numéro de dépôt: 20747043.6
(22) Date de dépôt: 26.06.2020
(51) Int. Cl.: F01D 25/24, B29C 70/54, B29C 70/02, F01D 11/12, B23Q 3/06, B25B 5/06, B29C 53/20, B61D 45/00, B29L 31/00

(54) **PROCEDE DE FABRICATION D'UN CARTER POUR UNE TURBOMACHINE ET OUTILLAGES POUR SA MISE EN OEUVRE**
VERFAHREN ZUR HERSTELLUNG EINES GEHÄUSES FÜR EINEN TURBINENMOTOR UND WERKZEUGE ZU SEINER UMSETZUNG
METHOD FOR MANUFACTURING A HOUSING FOR A TURBINE ENGINE AND TOOLS FOR THE IMPLEMENTATION THEREOF

(30) Priorité: 27.06.2019 FR 1907058
(43) Date de publication de la demande: 04.05.2022
(73) Titulaire: SAFRAN AIRCRAFT ENGINES, 75015 Paris (FR)
(72) Inventeur: FIORE, Vincent, Pascal, 77550 MOISSY-CRAMAYEL (FR); ARNOLD, Clémentine, 77550 MOISSY-CRAMAYEL (FR); BOUROLLEAU, Clément, 77550 MOISSY-CRAMAYEL (FR); DUPAYS, Thomas, 77550 MOISSY-CRAMAYEL (FR); DOMINGUES, Serge, 77550 MOISSY-CRAMAYEL (FR)
(74) Mandataire: Gevers & Orès
(86) Numéro de dépôt international: PCT/FR2020/051114
(87) Numéro de publication internationale: WO 2020/260835

(56) Documents cités:
- EP-A2- 2 116 695
- EP-B1- 2 116 695
- US-A1- 2003 082 024

## Description

### Domaine technique de l'invention

La présente invention concerne le domaine des carters de turbomachine d'aéronef.

La présente invention concerne particulièrement la fabrication d'un carter pour une turbomachine, en particulier d'aéronef, ainsi que des outillages pour la mise en œuvre de ce procédé.

### Arrière-plan technique

L'état de la technique comprend notamment le document EP-A2-2 116 695 qui divulgue le préambule de la revendication 1.

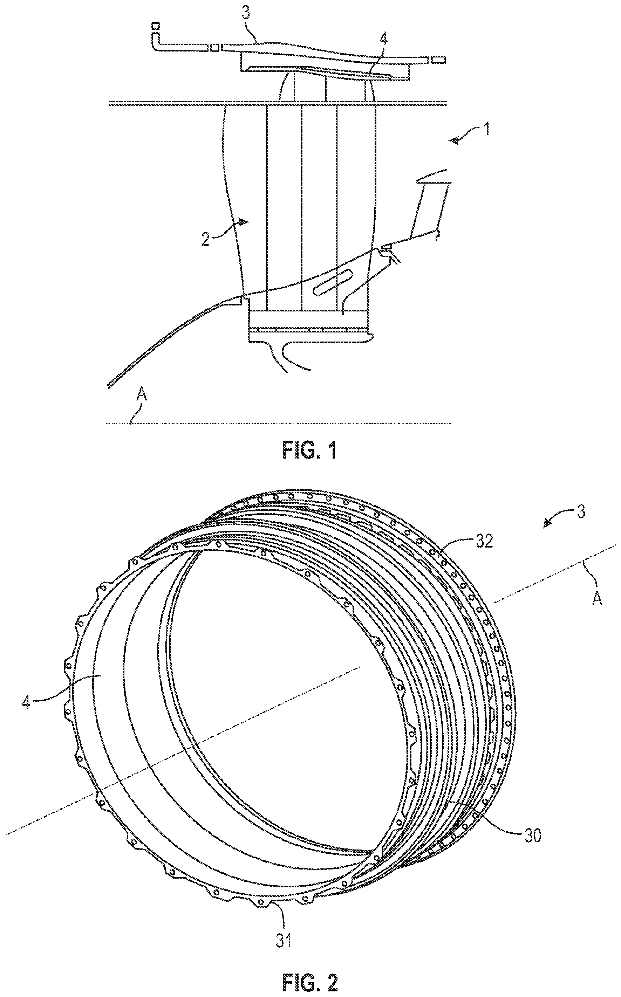

La figure 1 représente partiellement une soufflante d'une turbomachine d'aéronef.

De façon classique, une turbomachine comprend d'amont en aval, c'est-à-dire dans le sens d'écoulement des flux de gaz, une soufflante, un ou plusieurs compresseurs, une chambre de combustion, une ou plusieurs turbines, et une tuyère d'éjection des gaz de combustion sortant de la ou des turbines.

La soufflante 1 comporte une roue à aubes 2 qui est entourée par un carter 3 de soufflante, encore appelé carter de rétention du fait de sa fonction de rétention des aubes en cas de rupture de celles-ci, ou en cas d'entrée de débris dans la soufflante.

Comme cela est visible sur la figure 2, le carter de soufflante 3 comprend typiquement un corps 30 sensiblement cylindrique d'axe de révolution A qui s'étend autour des aubes de soufflante 2 de la turbomachine. Le carter comprend une bride annulaire de fixation 31, 32 à chacune de ses extrémités axiales. Ces brides 31,32 sont utilisées pour fixer le carter 3 à des parois annulaires de la nacelle de la turbomachine.

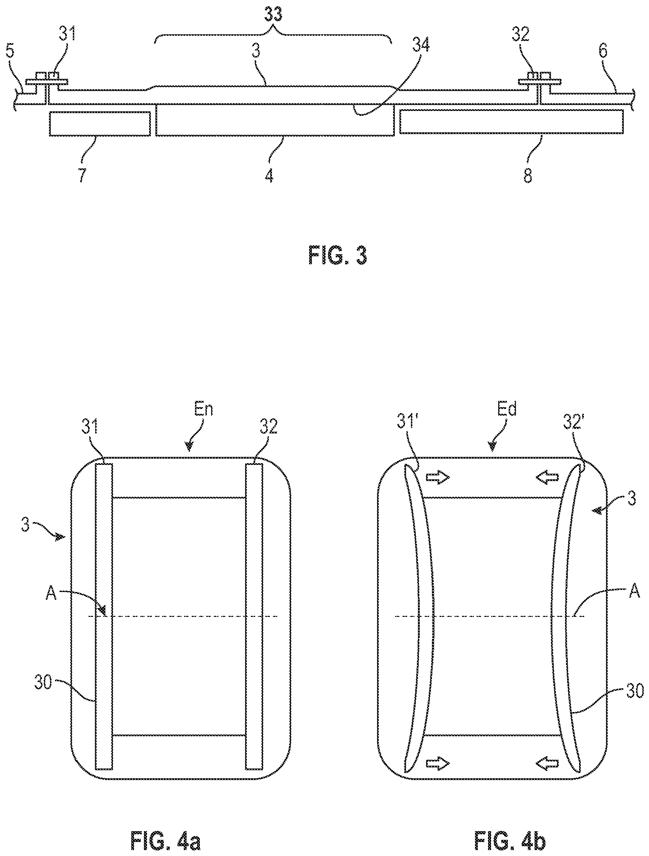

La figure 3 est une coupe à caractère schématique illustrant un carter de soufflante 3 selon l'art antérieur.

Le carter de soufflante 3 est lié d'une part à une manche d'entrée d'air 5, et, d'autre part, à une virole de carter intermédiaire 6. Il porte également des panneaux acoustiques amont 7 et des panneaux acoustiques aval 8. Le carter de soufflante 3 comporte encore une couche de support abradable 4, positionnée sur une face interne 34 du carter de soufflante 3, entre la zone comprenant les panneaux acoustiques amont 7 et la zone comprenant les panneaux acoustiques aval 8.

En plus de la fonction de rétention, le carter de soufflante 3 est également conçu pour :
- assurer une continuité mécanique (des efforts et des moments) entre la manche d'entrée d'air 5 et la virole de carter intermédiaire 6 ;
- permettre la fixation des panneaux d'une veine aérodynamique délimitée par la couche de support abradable 4, la zone des panneaux acoustiques amont 7 et la zone des panneaux acoustiques aval 8 assurant ainsi une continuité de la veine aérodynamique ;
- permettre la fixation d'équipements et de supports connus en soi ;
- tenir les spécifications de règlementation au feu et aux fuites ;
- permettre la continuité du courant électrique pour la tenue à la foudre, etc. Il est connu de fabriquer le corps du carter de soufflante en matériau composite à partir de fibres tissées et noyées dans une résine polymérique, le procédé de fabrication étant du type par « RTM » (acronyme anglais de « *Resin Transfert Molding* »).

L'utilisation d'un tel procédé est particulièrement avantageuse car il permet de réaliser des pièces ayant une masse globale moins élevée que ces mêmes pièces lorsqu'elles sont réalisées en matériau métallique, tout en présentant une résistance mécanique au moins équivalente sinon supérieure.

Toutefois, il peut être observé en sortie de moule, c'est-à-dire lors de l'extraction de la pièce fabriquée (le carter), une déformation vis-à-vis de la géométrie nominale théorique. On peut ainsi observer pour une bride annulaire de fixation du carter de soufflante, un défaut vis-à-vis d'une géométrie circulaire théorique, par exemple se présentant sous la forme de l'apparition d'une ovalisation de cette bride, lors de son extraction du moule. Par exemple, la figure 4 représente schématiquement un état nominal « En » correspondant à la géométrie circulaire théorique des brides de fixation 31, 32 et un état déformé correspondant à une courbure des brides de fixation 31', 32' en sortie de moule du carter de soufflante fabriqué.

De tels défauts peuvent notamment s'expliquer par le fait que des contraintes résiduelles s'appliquent à la pièce durant sa fabrication dans le moule (ex : gradient de polymérisation, tension d'enroulement pour une pièce en matériau composite), et sont relâchées lors de l'extraction de la pièce du moule, conduisant alors à une déformation de la pièce extraite.

Pour parer à cet inconvénient, il est connu d'utiliser au moins un moule comprenant une cavité de moulage dont la géométrie ne correspond pas à la géométrie nominale de la pièce à fabriquer mais à une géométrie pour laquelle la déformation a été prise en compte, de sorte à finalement obtenir lors de l'extraction de cette pièce du moule, la géométrie nominale de la pièce.

Un tel procédé peut certes permettre de compenser la déformation d'une pièce de révolution en sortie de moule. Cependant, lors de la fabrication d'un carter de soufflante, la déformation observée de celui-ci ne survient pas uniquement lors de son extraction du moule. La fabrication du carter implique en effet par la suite diverses opérations successives, telles des opérations d'usinage (ex : détourage, perçage) et de collage (de la couche abradable ou de panneaux acoustiques par exemple).

Les opérations d'usinage conduisent à la libération de contraintes physiques pouvant favoriser des déformations du carter. Les opérations de collage sont quant à elles couramment réalisées en autoclave. Ces opérations de collage impliquent des étapes de montée en température et de mise en pression du carter, suivies d'une étape de refroidissement de celui-ci. L'ensemble de ces étapes conduisent aussi à l'apparition de contraintes agissant sur la déformation des brides du carter. Diverses déformations du carter peuvent donc apparaître tout au long de son processus de fabrication et tendent alors à se cumuler. L'état de l'art existant apparait alors comme insuffisant pour contrer la déformation du carter de soufflante lors de sa fabrication, étant donné que l'apparition de cette déformation ne survient pas uniquement lors de l'extraction du carter de sa cavité de moulage mais aussi au cours d'étapes d'usinage et de collage.

La présente invention propose une solution pour limiter le risque de déformation des brides de fixation d'un carter de soufflante, lors d'une opération de collage d'une couche annulaire abradable.

Lors de cette opération, le carter est logé dans un autoclave et une partie d'un système de mise en pression est monté à l'intérieur du carter pour l'application d'une pression sur la couche abradable, radialement de l'intérieur vers l'extérieur. Ce système est relativement encombrant et empêche d'utiliser les solutions connues de l'art antérieur, telles que celle du document FR-A1-3 060 438, consistant à prévoir plusieurs pièces annulaires (jantes, flasques, tambours, vessies, etc.) à l'intérieur du carter, qui occupent tout l'espace dans le carter.

La présente invention propose une solution simple, efficace et économique à ce problème.

### Résumé de l'invention

L'invention propose ainsi un procédé de fabrication d'un carter de turbomachine d'aéronef, ce carter comportant :
- un corps annulaire s'étendant autour d'un axe A et réalisé dans un matériau composite comportant des fibres tissées et noyées dans une résine, ledit corps comportant une bride annulaire de fixation s'étendant radialement vers l'extérieur à chacune de ses extrémités axiales, et
- une couche annulaire en matériau abradable disposée à l'intérieur dudit corps, et recouvrant une première surface annulaire interne d'un tronçon intermédiaire dudit corps,
le procédé comprenant une étape b) de collage de la couche sur la première surface, lors de laquelle le carter est chauffé et comprimé par l'intermédiaire d'un système présent au moins en partie à l'intérieur du carter.

Le procédé selon l'invention comprend, préalablement à l'étape b) de chauffage et de compression du carter, une étape a) de montage d'au moins deux outillages de mise en forme entre les brides, chacun des outillages étant situé dans une zone circonférentielle à l'extérieur du corps annulaire du carter de façon à exercer des forces d'appui dans des directions axiales opposées sur ces brides.

Les forces d'appui exercées sur les brides par l'outillage ont pour but de déformer élastiquement au moins l'une des brides de façon ce que les déplacements ainsi obtenus compensent les déformations qui s'exerceront lors de l'étape b) de collage. Ces déformations dites de correction ne font alors que repositionner les brides dans leurs positions et formes d'origine. Avantageusement, les outillages sont le moins encombrant possible et les outillages sont disposés sur la surface extérieure du carter. Ceci permet, d'une part, de facilement manipuler et déplacer chaque outillage entre les zones circonférentielles du corps annulaire du carter, et d'autre part, de ne pas gêner l'opération de collage dans laquelle le corps annulaire peut être traversé par une partie du système nécessaire au chauffage et/ou à la mise en pression du carter lors de l'étape b).

Le procédé selon l'invention peut comprendre une ou plusieurs des caractéristiques suivantes, considérées indépendamment les unes des autres ou en combinaison les unes avec les autres :
- à l'étape a) du procédé, chaque outillage comprend une première plaque appliquée contre une face radiale de l'une des brides, une seconde plaque appliquée contre une face radiale en regard de l'autre des brides, et des tiges de liaison desdites plaques dont les longueurs sont augmentées pour exercer lesdites forces sur les brides ;
- les longueurs des tiges sont ajustées par l'intermédiaire d'un système manuel à molette et/ou à glissière ;
- à ladite étape a), lesdites première et seconde plaques ont une forme générale incurvée et lesdites plaques sont disposées sur le corps annulaire de façon à ce que leur concavité soit orientée vers l'axe A ;
- à ladite étape a), au moins l'une desdites première et seconde plaques comprend des pions engagés dans des orifices des brides ;
- à ladite étape b), le carter est disposé dans un autoclave et soumis à une température comprise entre 25 et 300°C, et à une pression comprise entre 1 et 10 bars, pendant une durée comprise entre 60 et 500 minutes ;
- à ladite étape b), le carter est soumis à une température comprise entre 80 et 200°C, et à une pression comprise entre 2 et 6 bars, pendant une durée comprise entre 180 et 300 minutes ;
- le nombre d'outillages est au moins égale à trois, ces outillages étant régulièrement répartis autour de l'axe A ;
- le procédé comprend, après l'étape b) de chauffage et de compression du carter, une étape c) de démontage et de retrait des outillages.

La présente invention concerne encore des outillages configurés pour la mise œuvre du procédé selon l'une des particularités de l'invention, chacun des outillages comprenant :
- une première plaque configurée pour être appliquée contre une face radiale de l'une des brides,
- une seconde plaque configurée pour être appliquée contre une face radiale en regard de l'autre des brides,
- des tiges de liaison des plaques dont les longueurs sont ajustables de façon à pouvoir régler la distance inter-plaques,
- chaque plaque présente une forme générale allongée et incurvée.

Chaque outillage de mise en forme selon l'invention peut comprendre une ou plusieurs des caractéristiques suivantes, prises isolément les unes des autres ou en combinaison les unes avec les autres :
- ledit outillage est amovible ;
- les tiges d'une des plaques s'étendent sensiblement radialement d'une paroi interne de ladite plaque pour se lier dans les tiges de l'autre plaque de façon complémentaire ;
- les tiges d'une des plaques sont reliées l'une avec les autres par un système manuel à molette et/ou glissière ;
- chaque plaque présente une forme générale incurvée ;
- l'étendue circonférentielle de chaque plaque (par rapport à l'axe A) est comprise entre 5 et 45°, de préférence entre 5 et 10° ;
- la première plaque et l'une des tiges sont monoblocs ; et
- la seconde plaque et l'une des tiges sont monoblocs.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig. 1] la figure 1 est une demi-vue schématique partielle en coupe axiale d'une soufflante d'une turbomachine d'aéronef selon l'état de la technique ;
[Fig. 2] la figure 2 est une vue schématique en perspective d'un carter de soufflante selon l'état de la technique ;
[Fig. 3] la figure 3 est une vue schématique en coupe transversale d'un carter selon l'état de la technique ;
[Fig. 4a] la figure 4a est une vue très schématique de côté montrant un état nominal des brides de fixation du carter après une opération de collage;
[Fig. 4b] la figure 4b est une vue très schématique de côté montrant un état déformé des brides de fixation du carter constaté dans l'état de la technique lors d'une opération de collage;
[Fig. 5] la figure 5 est une vue similaire à celle de la figure 4 et montrant très schématiquement la déformation élastique appliquée sur le carter pour compenser les effets des déformations, conformément au procédé selon l'invention ;
[Fig. 6] la figure 6 est une vue schématique en perspective d'un outillage pour la mise en œuvre du procédé selon l'invention ;
[Fig. 7] la figure 7 est une vue schématique en perspective d'un carter selon l'invention qui est équipé de plusieurs outillages de la figure 6 ;
[Fig. 8] la figure 8 est une vue schématique en perspective du carter équipé des outillages de la figure 7, dans une étape b) de collage du procédé selon l'invention.

### Description détaillée de l'invention

Par convention dans la présente demande, les termes « intérieur » et « extérieur », et « interne » et « externe » sont utilisés en référence à un positionnement par rapport à un axe A de rotation d'une turbomachine. Ainsi, un cylindre s'étendant selon l'axe A du moteur comporte une face intérieure tournée vers l'axe du moteur et une surface extérieure, opposée à sa surface intérieure. On entend par « longitudinal » ou « longitudinalement » toute direction parallèle à l'axe A, et par « transversalement » ou « transversal » toute direction perpendiculaire à l'axe A. De même, les termes « amont » et « aval » sont définis par rapport au sens de circulation de l'air dans la turbomachine.

Les figures 1 à 3 représentent un carter 3 de soufflante d'une turbomachine d'aéronef, par exemple un turboréacteur ou un turbopropulseur, tel que décrit précédemment dans l'arrière-plan technique de la présente demande.

Dans la description qui suit, l'invention est appliquée à un carter de soufflante 3, tel qu'illustré sur les figures 2 et 3 de l'état de la technique. L'invention n'est toutefois pas limitée à ce type de carter et peut être appliquée à d'autres carters d'une turbomachine.

Ce carter 3 auquel le procédé selon l'invention est appliqué, comprend un corps annulaire 30 s'étendant autour d'un axe A de révolution. Le carter 3 comprend une bride annulaire de fixation, respectivement amont 31 et aval 32, s'étendant radialement vers l'extérieur à chacune des extrémités axiales de son corps annulaire 30.

Dans l'exemple représenté, le carter 3 comprend en outre une couche annulaire 4 en matériau abradable disposée à l'intérieur du corps 30, et recouvrant une première surface annulaire interne 34 d'un tronçon intermédiaire 33 du corps 30.

Le corps 30 du carter peut être réalisé dans un matériau composite comportant des fibres tissées et noyées dans une résine.

La couche annulaire 4 est configurée pour être fixée par collage sur la première surface interne 34 du corps 30 du carter. Comme évoqué dans ce qui précède, lors de cette étape de collage, le carter 3 est chauffé et comprimé et susceptible de générer une déformation de la bride 31, 32. Les brides 31, 32 s'inclinent généralement en direction du corps 30 qui représente l'élément le plus massif du carter 3. Par exemple, la déformation de la bride amont 31 se manifeste par une inclinaison vers l'aval de la périphérie externe de la bride 31, alors que la périphérie externe de la bride aval 32 s'incline vers l'amont (figure 4).

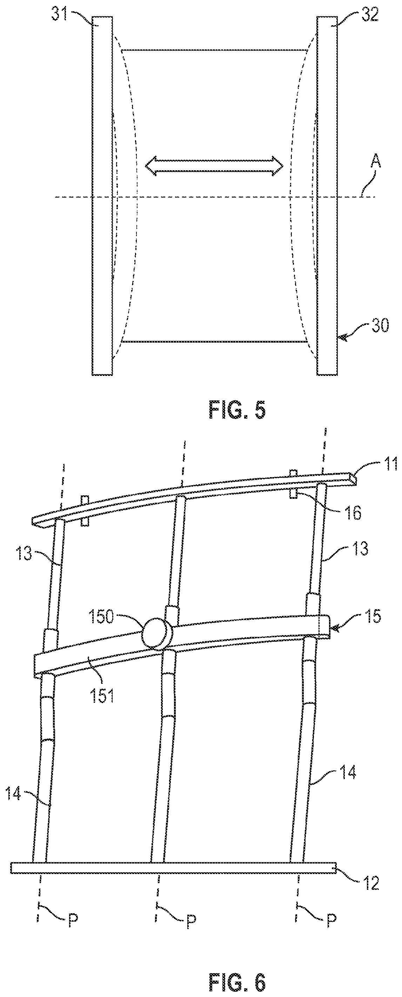

Pour éviter cette déformation, l'invention propose un outillage 10 spécifique qui est disposé à l'extérieur du carter 3 et qui permet de mettre en forme le carter 3 lors de l'opération de collage, pendant laquelle le carter 3 est soumis à un traitement thermique sous pression. En effet, l'outillage 10 permet de compenser ces déformations en exerçant sur les brides 31, 32, préalablement à l'opération de chauffage et de compression du carter, des forces d'appui (double flèche à la figure 5) qui sont orientées dans des directions axiales opposées. Ces forces génèrent une déformation élastique permettant de corriger au moins partiellement la distorsion de la bride 31, 32. La figure 6 illustre un mode de réalisation de cet outillage 10 qui comprend deux plaques 11, 12 coaxiales et des tiges de liaison 13 des plaques 11, 12 dont les longueurs sont modifiables de façon à pouvoir régler la distance inter-plaques.

Les plaques 11, 12 ont une forme générale allongée et sensiblement incurvée. Les plaques 11, 12 sont destinées à être disposées sur le corps 30 de façon à ce que leur concavité soit orientée vers l'axe A. En particulier, ces plaques 11, 12 sont configurées pour être appliquées contre une face radiale des brides 31, 32. Les plaques 11, 12 ont de préférence des étendues circonférentielles identiques ou similaires entre elles. L'étendue circonférentielle de la plaque 11, 12 par rapport à l'axe A peut être comprise entre 5 et 45°, de préférence entre 10 et 20°.

Chaque plaque 11, 12 est reliées à au moins deux tiges de liaison 13, 14. Sur la figure 6, les tiges 13, 14 sont au nombre de trois réparties régulièrement sur l'étendue longitudinale ou circonférentielle de la plaque. Les tiges 13 et la première plaque 11 sont de préférence monoblocs, et les tiges 14 et la seconde plaque sont de préférence monoblocs. Les tiges 13 peuvent être montées de manière télescopique dans les tiges 14. Chaque tige 13, 14 s'étend sensiblement suivant un plan P. Le plan P est sensiblement parallèle à l'axe A. Ainsi, les tiges 13 de la première plaque 11 coulissent de manière télescopique dans les tiges 14 de la seconde plaque 12, chacun selon un axe de coulissement. Cet axe de coulissement passe sensiblement suivant le plan P. Par exemple, les tiges d'au moins une des plaques sont tubulaires de façon à ce que les tiges de l'autre plaque s'engagent dans les ouvertures tubulaires de ces tiges tubulaires. Sur la figure 6, les tiges 13 s'insèrent au moins partiellement dans les tiges 14 de la seconde plaque 12. Selon un mode de réalisation non représenté, les extrémités des tiges peuvent être filetées de façon à réaliser des liaisons par vissage avec les tiges de l'autre plaque.

Par ailleurs, l'outillage 10 comprend un système 15 permettant un réglage des longueurs des tiges 13, 14 entre les plaques 11, 12. Le système 15 peut comprendre les tiges d'une des plaques, notamment les tiges 14 de la seconde plaque 12 sur la figure 6, et une pièce151 connectant les tiges entre elles. La pièce 151 comprend une molette 150 à verrouillage et/ou à liaison glissière. Ainsi, ce système 15 peut être réalisé manuellement ou par une glissière. Dans le premier cas, les longueurs des tiges sont réglées en rapprochant ou éloignant manuellement les tiges 13 des tiges 14 de la seconde plaque 12, puis la molette 150 est utilisée pour verrouiller les tiges réglées selon les longueurs souhaitées (figure 6). Dans le second cas (non représenté sur les figures), les longueurs des tiges sont réglées en faisant coulisser les tiges, qui sont connectées l'une aux autres par la liaison glissière, et en les verrouillant selon les longueurs souhaitées. Le système 15 de réglage peut être rapporté ou être intégré sur les tiges d'une des plaques.

Avantageusement, au moins l'une des plaques 11, 12 comprend des pions 16. Les pions 16 peuvent être rapportés sur la plaque 11, 12 ou être formés en monobloc avec la plaque 11, 12 lors de son usinage. Ces pions 16 sont configurés pour s'engager dans des orifices 37 des brides 31, 32 de façon à immobiliser l'outillage 10 en direction circonférentielle sur le corps 30 du carter. Selon un mode de réalisation non représenté sur les figures, les pions 16 peuvent être formés par les extrémités des tiges 13, 14 qui traversent les plaques 11, 12 et peuvent être insérées dans les orifices 37 des brides 31, 32. Ces orifices 37 préexistants sont avantageusement ceux destinés à recevoir les vis de fixation de la roue d'aube 2 à un autre élément de stator de la turbomachine. La présente invention utilise certains de ces orifices 37 pour lier temporairement l'outillage 10 sur les brides du carter 3.

L'outillage 10 de l'invention peut être réalisé dans un alliage métallique, tel qu'en acier.

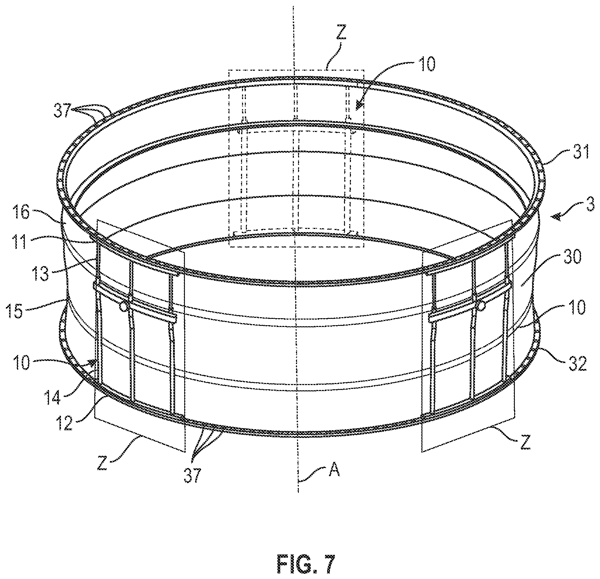

Les étapes du procédé de fabrication selon l'invention sont décrites en références aux figures 7 à 8.

Pour réaliser les étapes du procédé de fabrication de l'invention, la présente invention utilise un carter 3, des outillages 10 de mise en forme selon l'invention, un autoclave 9 et un système 19 de mise en pression.

En pratique, lors de l'opération de collage, le carter 3 est disposé dans l'autoclave 9 de façon à ce que son axe A soit orienté verticalement. Le système 19 est monté à l'intérieur du carter 3, ce système 19 étant schématiquement représenté à la figure 9 et occupe une partie de l'espace interne du carter 3. L'outillage 10 est conçu pour tenir compte de cette contrainte.

Ainsi, une première étape a) du procédé de l'invention consiste à monter les outillages 10 sur la surface circonférentielle externe du corps 30 du carter 3, entre les brides 31, 32. Pour cela, au moins deux outillages 10 sont régulièrement répartis dans des zones circonférentielles Z à l'extérieur du corps 30 (visibles sur la figure 7) de façon à homogénéiser les forces d'appui autour des brides. Dans l'exemple représenté, le nombre d'outillage 10 sont de trois.

La première plaque 11 de chaque outillage 10 est appliquée contre une face radiale de la bride 31 et la seconde plaque 12 est appliquée contre une face radiale en regard de l'autre bride 32. Pour cela, chaque outillage 10 est manipulé par un opérateur de façon à augmenter la longueur des tiges 13, 14 pour exercer les forces d'appui nécessaire sur les brides 31, 32, comme décrit dans ce qui précède. Les longueurs des tiges 13, 14 peuvent être ajustées par l'intermédiaire du système 15 manuel à molette 150 et/ou à glissière.

Pour garantir un positionnement précis des outillages 10 sur le carter 3, il est de plus envisageable d'aligner les orifices 37 préexistants des brides 31, 32 avec les pions 16 des outillages 10.

Enfin, des pions 16 des plaques 11, 12 sont engagés dans les orifices 37 des brides 31, 32, de façon à verrouiller, au moins temporairement, l'ensemble outillages sur le carter.

Dans un exemple particulier de réalisation de l'invention, l'ensemble des outillages 10 équipé sur le carter 3, a un poids total compris entre 8 et 15 kg.

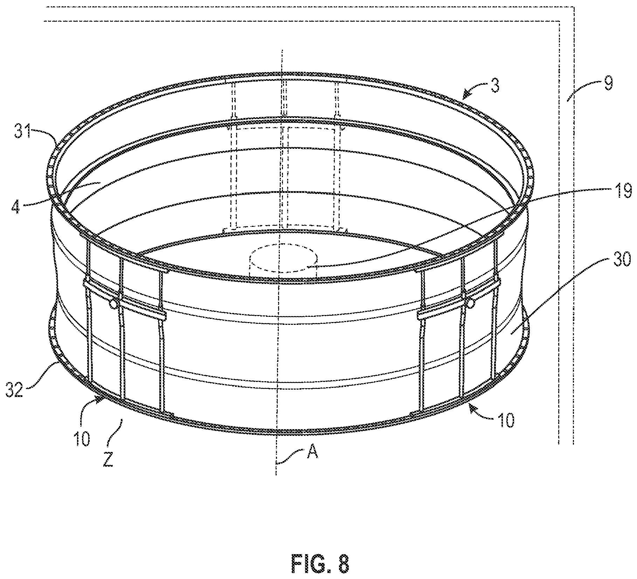

Une seconde étape b) du procédé de l'invention consiste à coller la couche abradable 4 sur la surface interne 34 du tronçon intermédiaire 33 du carter 3. Lors de cette étape b), le carter 3 est disposé dans l'autoclave 9 et une partie du système 19 est installé à l'intérieur du carter (figure 8). Le carter 3 à l'étape b), peut être soumis à une pression comprise entre 1 et 10 bars, et de préférence entre 2 et 6 bars. Cette mise en pression peut être réalisée en soumettant le carter à un vide, par exemple entre deux éléments annulaires disposés respectivement à l'intérieur de la couche abradable et à l'extérieur de l'enveloppe. Le carter 3 peut être soumis à une température comprise entre 25 et 300°C, et de préférence entre 80 et 200°C. Cette opération peut être réalisée lors d'un cycle ayant une durée comprise entre 60 et 500 minutes, et de préférence entre 180 et 300 minutes.

A la fin de cette étape b), la température et la pression auxquelles le carter 3 est soumis sont abaissées. Après refroidissement complet du carter 3, la couche abradable 4 est collée et fixée sur la surface interne 34, et les outillages 10 peuvent être démontés et retirés.

L'invention apporte des avantages à plusieurs niveaux. D'un point de vue technique, il n'y a plus besoin de réaliser des études d'intégration en fonction de l'état de déformation des brides du carter pour qu'elle corresponde à son état nominal final de fonctionnement dans une turbomachine. D'un point de vue industriel, il n'y a plus besoin d'usinage à façon des faces des brides ou des retouches lors des cas de déformations trop importantes. La fabrication et l'assemblage du carter sont simplifiés et son contrôle tridimensionnel également. L'invention permet ainsi d'améliorer les performances mécanique et aérodynamique du carter, ainsi que son procédé de fabrication et de gagner en temps de cycle global.

## Revendications

1. Procédé de fabrication d'un carter (3) de turbomachine d'aéronef, ce carter comportant :
- un corps annulaire (30) s'étendant autour d'un axe A et réalisé dans un matériau composite comportant des fibres tissées et noyées dans une résine, ledit corps (30) comportant une bride annulaire de fixation (31, 32) s'étendant radialement vers l'extérieur à chacune de ses extrémités axiales, et
- une couche annulaire (4) en matériau abradable disposée à l'intérieur dudit corps (30), et recouvrant une première surface annulaire interne (36) d'un tronçon intermédiaire (33) dudit corps (30),
le procédé comprenant une étape b) de collage de la couche (4) sur la première surface (36), lors de laquelle le carter (3) est chauffé et comprimé par l'intermédiaire d'un système (18) présent au moins en partie à l'intérieur du carter (3),
**caractérisé en ce que** le procédé comprend, préalablement à l'étape b) de chauffage et de compression du carter (3), une étape a) de montage d'au moins deux outillages (10) de mise en forme entre les brides (31, 32), chacun des outillages (10) étant situé dans une zone circonférentielle (Z) à l'extérieur du corps (30) de façon à exercer des forces d'appui dans des directions axiales opposées sur ces brides (31, 32).

2. Procédé selon la revendication 1, **caractérisé en ce qu'**à l'étape a) du procédé, chaque outillage (10) comprend une première plaque (11) appliquée contre une face radiale de l'une des brides (31), une seconde plaque (12) appliquée contre une face radiale en regard de l'autre des brides (32), et des tiges (13, 14) de liaison desdites plaques dont des longueurs sont augmentées pour exercer lesdites forces sur les brides.

3. Procédé selon la revendication 2, **caractérisé en ce que** les longueurs des tiges (13, 14) sont ajustées par l'intermédiaire d'un système (15) manuel à molette (150) et/ou à glissière.

4. Procédé selon la revendication 2 ou 3, **caractérisé en ce qu'**à ladite étape a), lesdites première (11) et seconde plaques (12) ont une forme générale incurvée et lesdites plaques sont montées sur le corps annulaire (3) de façon à ce que leur concavité soit orientée vers l'axe (A).

5. Procédé selon une des revendications 1 à 4, **caractérisé en ce qu'**à ladite étape a), au moins l'une desdites première et seconde plaques (11, 12) comprend des pions (16) engagés dans des orifices (37) des brides (31, 32).

6. Procédé selon une des revendications 1 à 5, **caractérisé en ce qu'**à ladite étape b), le carter (3) est disposé dans un autoclave (9) et soumis à une température comprise entre 25 et 300°C, et à une pression comprise entre 1 et 10 bars, pendant une durée comprise entre 60 et 500 minutes.

7. Procédé selon une des revendications 1 à 5, **caractérisé en ce qu'**à ladite étape b), le carter (3) est disposé dans un autoclave (9) et soumis à une température comprise entre 80 et 200°C, et à une pression comprise entre 2 et 6 bars, pendant une durée comprise entre 180 et 300 minutes.

8. Procédé selon l'une des revendications 1 à 7, **caractérisé en ce que** le nombre d'outillages (10) est au moins égal à trois, ces outillages (10) étant régulièrement répartis autour de l'axe (A).

9. Procédé selon l'une des revendications 1 à 8, **caractérisé en ce qu'**il comprend, après l'étape b) de chauffage et de compression du carter (3), une étape c) de démontage et de retrait des outillages (10).

10. Outillages (10) configurés pour la mise en œuvre du procédé selon l'une des revendications 1 à 9, chacun des outillages (10) comprenant :
- une première plaque (11) configurée pour être appliquée contre une face radiale de l'une des brides (31),
- une seconde plaque (12) configurée pour être appliquée contre une face radiale en regard de l'autre des brides (32), et
- des tiges (13, 14) de liaison des plaques (11, 12) dont les longueurs étant ajustables de façon à pouvoir régler la distance inter-plaques, **caractérisés en ce que** chaque plaque (11, 12) présente une forme allongée et incurvée.

11. Outillages (26) selon la revendication 10, **caractérisé en ce que** les tiges (13, 14) d'une des plaques (11, 12) sont montées de manière à coulisser dans les autres tiges (13, 14) de l'autre plaque (11, 12).

12. Outillages (26) selon la revendication 10 ou 11, **caractérisé en ce que** les tiges (13, 14) d'une des plaques (11, 12) sont reliées l'une avec les autres par un système (15) manuel à molette (150) et/ou glissière.

13. Outillages (26) selon l'une des revendications 10 à 12, **caractérisé en ce que** l'étendue circonférentielle de chaque plaque (11, 12) est comprise entre 5 et 45°, de préférence entre 10° et 20°.

14. Outillages (26) selon l'une des revendications 10 à 13, **caractérisé en ce que** la première plaque (11) et l'une des tiges (13) sont monoblocs et/ou la seconde plaque (12) et l'une des tiges (14) sont monoblocs.

## Patentansprüche

1. Verfahren zur Herstellung eines Gehäuses (3) eines Flugzeugtriebwerkmotors, wobei dieses Gehäuse Folgendes umfasst:
- einen ringförmigen Körper (30), der sich um eine Achse A erstreckt und aus einem Verbundmaterial hergestellt ist, das gewobene und in einem Harz eingebettete Fasern umfasst, wobei der Körper (30) einen ringförmigen Befestigungsflansch (31, 32) umfasst, der sich an jedem seiner axialen Enden radial nach außen erstreckt, und
- eine ringförmige Schicht (4) aus einem abreibbaren Material, die im Inneren des Körpers (30) angeordnet ist und eine erste innere ringförmige Oberfläche (36) eines mittleren Teilabschnitts (33) des Körpers (30) bedeckt,
wobei das Verfahren einen Schritt b) des Klebens der Schicht (4) auf die erste Oberfläche (36) umfasst, bei dem das Gehäuse (3) mithilfe eines zumindest teilweise im Inneren des Gehäuses (3) vorhandenen Systems (18) erhitzt und komprimiert wird,
**dadurch gekennzeichnet, dass** das Verfahren vor dem Schritt b) der Erhitzung und Komprimierung des Gehäuses (3) einen Schritt a) der Montage von mindestens zwei Formwerkzeugen (10) zwischen den Flanschen (31, 32) umfasst, wobei jedes der Werkzeuge (10) in einem Umfangsbereich (Z) auf der Außenseite des Körpers (30) gelegen sind, sodass sie Stützkräfte in entgegengesetzte axiale Richtungen auf diese Flansche (31,32) ausüben.

2. Verfahren nach Anspruch 1, **dadurch gekennzeichnet, dass** im Schritt a) des Verfahrens jedes Werkzeug (10) eine erste Platte (11), die an einer ersten radialen Seite eines der Flansche (31) angebracht ist, eine zweite Platte (12), die an einer radialen Seite dem anderen der Flansche (32) zugewandt angebracht ist, und Stangen (13, 14) zur Verbindung der Flansche umfasst, deren Längen vergrößert sind, um die Kräfte auf die Flansche auszuüben.

3. Verfahren nach Anspruch 2, **dadurch gekennzeichnet, dass** die Längen der Stangen (13, 14) mittels eines manuellen Systems (15) mit Drehknopf (150) und/oder Gleitführung eingestellt werden.

4. Verfahren nach Anspruch 2 oder 3, **dadurch gekennzeichnet, dass** im Schritt a) die erste (11) und die zweite Platte (12) eine im Allgemeinen gekrümmte Form aufweisen und die Platten so am ringförmigen Körper (3) montiert sind, dass ihre Konkavität zur Achse (A) ausgerichtet ist.

5. Verfahren nach einem der Ansprüche 1 bis 4, **dadurch gekennzeichnet, dass** im Schritt a) mindestens eine der ersten und der zweiten Platte (11, 12) Stifte (16) umfasst, die in Öffnungen (37) der Flansche (31,32) eingreifen.

6. Verfahren nach einem der Ansprüche 1 bis 5, **dadurch gekennzeichnet, dass** im Schritt b) das Gehäuse (3) in einem Autoklav (9) angeordnet ist und während einer Dauer zwischen 60 und 500 Minuten einer Temperatur zwischen 25 und 300°C und einem Druck zwischen 1 und 10 bar unterzogen wird.

7. Verfahren nach einem der Ansprüche 1 bis 5, **dadurch gekennzeichnet, dass** im Schritt b) das Gehäuse (3) in einem Autoklav (9) angeordnet ist und während einer Dauer zwischen 180 und 300 Minuten einer Temperatur zwischen 80 und 200°C und einem Druck zwischen 2 und 6 bar unterzogen wird.

8. Verfahren nach einem der Ansprüche 1 bis 7, **dadurch gekennzeichnet, dass** die Anzahl von Werkzeugen (10) mindestens drei beträgt, wobei diese Werkzeuge (10) regelmäßig um die Achse (A) verteilt sind.

9. Verfahren nach einem der Ansprüche 1 bis 8, **dadurch gekennzeichnet, dass** es nach dem Schritt b) der Erhitzung und Komprimierung des Gehäuses (3) einen Schritt c) der Demontage und Entnahme der Werkzeuge (10) umfasst.

10. Werkzeuge (10), die für den Einsatz des Verfahrens nach einem der Ansprüche 1 bis 9 konfiguriert sind, wobei jedes der Werkzeuge (10) umfasst:
- eine erste Platte (11), die konfiguriert ist, um an einer radialen Seite eines der Flansche (31) angebracht zu werden,
- eine zweite Platte (12), die konfiguriert ist, um an einer radialen Seite dem anderen der Flansche (32) zugewandt angebracht zu werden, und
- Stangen (13, 14) zur Verbindung der Platten (11, 12), deren Längen einstellbar sind, sodass der Abstand zwischen den Platten verstellt werden kann, **dadurch gekennzeichnet, dass** jede Platte (11, 12) eine längliche und gekrümmte Form aufweist.

11. Werkzeuge (26) nach Anspruch 10, **dadurch gekennzeichnet, dass** die Stangen (13, 14) einer der Platten (11, 12) derart montiert sind, dass sie in die anderen Stangen (13, 14) der anderen Platte (11,12) gleiten.

12. Werkzeuge (26) nach Anspruch 10 oder 11, **dadurch gekennzeichnet, dass** die Stangen (13, 14) einer der Platten (11, 12) durch ein manuelles System (15) mit Drehknopf (150) und/oder Gleitführung miteinander verbunden sind.

13. Werkzeuge (26) nach Anspruch 10 bis 12, **dadurch gekennzeichnet, dass** die Umfangserstreckung jeder Platte (11, 12) zwischen 5 und 45°, vorzugsweise zwischen 10° und 20° beträgt.

14. Werkzeuge (26) nach Anspruch 10 bis 13, **dadurch gekennzeichnet, dass** die erste Platte (11) und eine der Stangen (13) einstückig sind und/oder die zweite Platte (12) und eine der Stangen (14) einstückig sind.

## Claims

1. A method for manufacturing a casing (3) of an aircraft turbine engine, said casing comprising:
- an annular body (30) extending around an axis A and made of a composite material comprising fibres woven and embedded in a resin, said body (30) comprising an annular fastening flange (31, 32) extending radially outwards at each axial ends thereof, and
- an annular layer (4) of abradable material arranged inside said body (30), and covering a first internal annular surface (36) of an intermediate section (33) of said body (30),
the method comprising a step b) of bonding the layer (4) to the first surface (36), during which the casing (3) is heated and compressed by a system (18) present at least partly inside the casing (3),
**characterised in that** the method comprises, prior to the step b) of heating and compressing the casing (3), a step a) of mounting at least two shaping tools (10) between the flanges (31, 32), each of the tools (10) being located in a circumferential area (Z) outside the body (30) so as to exert bearing forces in opposite axial directions on these flanges (31, 32).

2. The method according to claim 1, **characterised in that** in the step a) of the method, each tool (10) comprises a first plate (11) applied against a radial face of one of the flanges (31), a second plate (12) applied against a radial face facing the other of the flanges (32), and rods (13, 14) for connecting said plates, the lengths of which are increased to exert said forces on the flanges.

3. The method according to claim 2, **characterised in that** the lengths of the rods (13, 14) are adjusted by a manual system (15) with knob adjuster (150) and/or slide.

4. The method according to claim 2 or 3, **characterised in that** in said step a) said first (11) and second (12) plates are of generally curved shape and said plates are mounted on the annular body (3) so that their concavity is oriented towards the axis (A).

5. The method according to one of claims 1 to 4, **characterised in that** in said step a) at least one of said first and second plates (11, 12) comprises pins (16) engaged in orifices (37) of the flanges (31, 32).

6. The method according to one of claims 1 to 5, **characterised in that** in said step b), the casing (3) is placed into an autoclave (9) and subjected to a temperature of between 25 and 300°C, and to a pressure of between 1 and 10 bars, for a time of between 60 and 500 minutes.

7. The method according to one of claims 1 to 5, **characterised in that** in said step b), the casing (3) is placed into an autoclave (9) and subjected to a temperature of between 80 and 200°C, and to a pressure of between 2 and 6 bars, for a time of between 180 and 300 minutes.

8. The method according to one of claims 1 to 7, **characterised in that** the number of tools (10) is at least equal to three, these tools (10) being regularly distributed around the axis (A).

9. The method according to one of claims 1 to 8, **characterised in that** it comprises, after the step b) of heating and compressing the casing (3), a step c) of dismantling and removing the tools (10).

10. Tools (10) configured for the implementation of the method according to any of claims 1 to 9, each of the tools (10) comprising:
- a first plate (11) configured to be applied against a radial face of one of the flanges (31),
- a second plate (12) configured to be applied against a radial face facing the other of the flanges (32), and
- rods (13, 14) for connecting the plates (11, 12), the lengths of which are adjustable so that the inter-plates distance can be adjusted, **characterised in that** each plate (11, 12) has an elongated and curved shape.

11. The tools (26) of claim 10, **characterised in that** the rods (13, 14) of one of the plates (11, 12) are slidably mounted into the other rods (13, 14) of the other plate (11, 12).

12. The tools (26) according to claim 10 or 11, **characterised in that** the rods (13, 14) of one of the plates (11, 12) are connected with each other by a manual system (15) with knob adjuster (150) and/or slide.

13. The tools (26) according to any of claims 10 to 12, **characterised in that** the circumferential extent of each plate (11, 12) is between 5 and 45°, preferably between 10° and 20°.

14. The tools (26) of any of claims 10 to 13, **characterised in that** the first plate (11) and one of the rods (13) are integral and/or the second plate (12) and one of the rods (14) are integral.
